# EUROPEAN PATENT SPECIFICATION

(11) **EP 1 076 229 B1**
(45) Date of publication and mention of the grant of the patent: **25.07.2007**
(21) Application number: 00660138.9
(22) Date of filing: 11.08.2000
(51) Int. Cl.: G01G 19/00, G01G 19/02

(54) **Method and arrangement for weighing a moving vehicle**
Verfahren und Gerät zum Wiegen ein bewegenden Fahrzeugs
Procédé et appareil de pesage d'un véhicule en mouvement

(30) Priority: 11.08.1999 FI 991701
(43) Date of publication of application: 14.02.2001
(73) Proprietor: Tamtron Systems Oy, 02160 Espoo (FI)
(72) Inventor: Verho, Jukka Olavi, 00810 Helsinki (FI); Järvelä, Matti Einari, 01650 Vantaa (FI); Asikainen, Pentti Sauli, 35800 Mänttä (FI)
(74) Representative: Kupiainen, Juhani Kalervo

(56) References cited:
- EP-A- 0 502 803
- WO-A-98/40705
- US-A- 5 260 520
- US-A- 5 585 604

## Description

The invention relates to a method and an arrangement for weighing a moving vehicle. More specifically, the invention relates to a method and an arrangement for establishing the static weight of a moving vehicle.

In the prior art vehicle weighing methods, a vehicle is weighed by means of a vehicle-size weighbridge, on which the vehicle must be stationary, or if the measurement is performed while a vehicle is moving, the measurement result is often inconsistent with what has been measured with the vehicle at rest. As the vehicle is traveling across a weighbridge, there are several factors causing discrepancies between kinetic and static measurement results. The force resulting from a movement experienced by the vehicle and from an air drag caused by the wind produces typically a vehicle-slowing downforce. In some vehicles, depending on the design thereof, an uplifting force is also conceivable. Moreover, the impulse resulting from an automobile's momentum and its change and applied to weighing instruments typically increases the kinetic reading. In many driving situations, the vehicles also accelerate or decelerate. This may also transmit components of force parallel to a weight vector weighed by the weighing instruments.

A method according to the preamble of claim 1 is known from US-A-5260520.

Thus, the prior art involves essential drawbacks. Stopping a vehicle for weighing is always inconvenient both for a driver and a weighing party. However, if a vehicle is weighed in motion, the obtained measurement result will be incorrect due to several factors as the object of measurement is not a static vehicle weight but, instead, a kinetic weight, the static weight being merely one component thereof.

It is an object of the present invention to eliminate or alleviate the above drawbacks. The inventive method and arrangement for weighing a moving vehicle enables a highly accurate measurement for the static weight of a vehicle. In addition, the inventive method and arrangement for weighing a moving vehicle enables a highly accurate measurement for the axle-specific static weight of a vehicle. Thus, stops are not necessary. Furthermore, the invention facilitates processing of the measurement results.

All the above benefits associated with a solution of the invention are extra advantageously achievable with an embodiment, which involves the measurement of a force applied to weighing sensors and, concurrently with this measurement, the measurement of a force applied to correction sensors. This is followed by differentiating a force parallel to the vertical normal of motion and produced by the impulse and/or acceleration of the motion of an automobile, and by subtracting a kinetic extra weight from the measurement result of the weighing sensors. The extra weight may also be negative in certain embodiments. Hence, the result will be the static weight of a vehicle, i.e. the rest mass.

A method of the invention for weighing a moving vehicle is characterized in that
- at least one weighing sensor measures the kinetic weight of a vehicle,
- at least one correction sensor measures acceleration forces resulting from the motion of a vehicle,
- the measurement results of at least one correction sensor and at least one weighing sensor are used as a basis for establishing an estimate regarding the static weight of a vehicle, i.e. the rest mass.

An arrangement of the invention for weighing a moving vehicle is characterized by comprising
- a weighbridge for supporting at least a partial weight of a vehicle,
- at least one weighing sensor associated with the weighbridge for measuring the kinetic weight of a vehicle from the weighbridge,
- at least one correction sensor associated with the weighbridge for measuring forces resulting from the motion of a vehicle, as well as
- means for establishing an estimate regarding the static weight of a vehicle, i.e. the rest mass, on the basis of measurement results from at least one correction sensor and at least one weighing sensor.

Preferred embodiments of the invention are set forth in the non-independent claims.

A few preferred exemplary embodiments of the invention will now be described in slightly more detail with reference to the accompanying drawings.
Fig. 1 shows one embodiment 10 for a weighbridge according to the inventive solution.
Fig. 2A shows one embodiment 20 according to the inventive solution, comprising three weighbridges.
Fig. 2B shows one embodiment 60 according to the inventive solution, comprising two successive weighbridges.
Fig. 3 shows one preferred embodiment for a method according to the inventive solution in the form of a flowchart 30.
Fig. 4 shows one embodiment 40 according to the inventive solution for a processing system of measurement results.
Fig. 5 shows a second embodiment 50 according to the inventive solution for a processing system of measurement results.

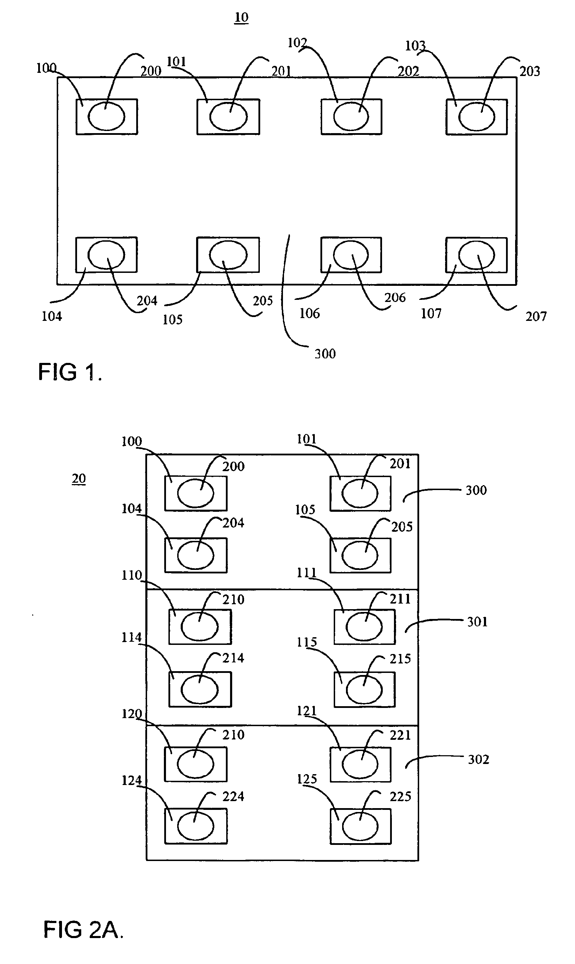

Fig. 1 illustrates a weighbridge 300 run over by a vehicle. The weighbridge has its length preferably dimensioned in such a way that it is run over by tyres included in a single axle/axle system at a time. The weighbridge is mounted on an underlay through the intermediary of sensors. Weighing sensors 100, 101, 102, 103, 104, 105, 106, 107 are preferably set along the sides of the weighbridge 300, but some of said weighing sensors may also be located in the middle section of a weighbridge. Correction sensors 200, 201, 202, 203, 204, 205, 206, 207 are in this embodiment set in conjunction with the weighing sensors 100, 101, 102, 103, 104, 105, 106, 107, but it is also possible in several embodiments that the correction sensors be placed apart. It is also obvious that the number of both weighing sensors 100, 101, 102, 103, 104, 105, 106, 107 and correction sensors 200, 201, 202, 203, 204, 205, 206, 207 may vary in preferred embodiments of the invention. In one preferred embodiment, the weighbridge is provided with four weighing sensors and two acceleration sensors.

As a vehicle is approaching allegorically from the top of the figure, the tyres of one axle/axle system of the vehicle make a first contact with the sensors 100, 101, 102, 103 and 200, 201, 202, 203.

The correction sensors 200, 201, 202, 203 preferably measure a component which is normal to the plane of the accelerating motion of a vehicle. This may result from an impulse experienced by a vehicle, a counterforce produced by the air drag opposing the motion of a vehicle, and/or other forces applied to a vehicle.

As the vehicle drives across the weighbridge 300,the second sensors 104, 105, 106, 107 and 204, 205, 206, 207 are preferably adapted to repeat the same measurements.

In some preferred embodiments of the invention, the measurement of an acceleration component normal to the motion is arranged, such that the correction sensors 200, 201, 202, 203, 204, 205, 206, 207 are adapted to measure the speed, acceleration of a vehicle, the wind speed and/or the forces produced by the motion of a vehicle in the direction of motion of the vehicle and/or in a horizontal direction normal to the motion of the vehicle. Thus, it is possible to calculate the proportion of the rest mass of the kinetic weight on the basis of knowing the acceleration applied to the mass by forces resulting from the motion.

In some preferred embodiments of the invention, the measurement results of both correction sensors 200, 201, 202, 203, 204, 205, 206, 207 and weighing sensors 100, 101, 102, 103, 104, 105, 106, 107 are compared with other measurement results obtained by similar or different type of sensors. This may provide a lot of beneficial and specifying information regarding the state of motion of a vehicle. For example, if the correction sensors 200, 201, 202, 203 measure speeds or accelerations essentially lower than those measured by the correction sensors 204, 205, 206, 207, the reasonable conclusion is that the vehicle is accelerating. In addition, it is possible to establish an estimate regarding the average speed. These factors contribute essentially to the kinetic weight of a vehicle.

Some preferred embodiments of the invention make use of the location of the sensors 100, 101, 102, 103, 104, 105, 106, 107 and 200, 201, 202, 203, 204, 205, 206, 207. If different sensors provide substantially different readings, it is also possible that the weight of a vehicle is not evenly distributed. Another possibility is that the vehicle is running in a slight curve, whereby the components of laterally existing forces may have an effect on the kinetic weight. The effects resulting from a lateral movement of a vehicle or an uneven distribution of mass can also be analyzed by comparing results measured by different sensors from different locations. The possible inclination of a weighbridge can be compensated for mathematically by means of divergent components of forces. Thus, it is possible to make an accurate estimate regarding the static weight of a vehicle.

Fig. 2A illustrates a solution 20, which comprises three weighbridges 300, 301 and 302 in succession. Each weighbridge is provided with four weighing sensors and four correction sensors. Thus, the weighbridge 300 carries weighing sensors 100, 101, 104 and 105 as well as correction sensors 200, 201, 204 and 205. The weighbridge 301 carries weighing sensors 110, 111, 114 and 115 as well as correction sensors 210, 211, 214 and 215. Furthermore, the weighbridge 302 is provided with weighing sensors 120, 121, 124 and 125 as well as with correction sensors 220, 221, 224 and 225. As the number of sensors and bridges is increased this way, there will be more monitoring points for the state of motion and kinetic weight of a vehicle. Thus, the inventive solution can provide more and more accurate measurement results.

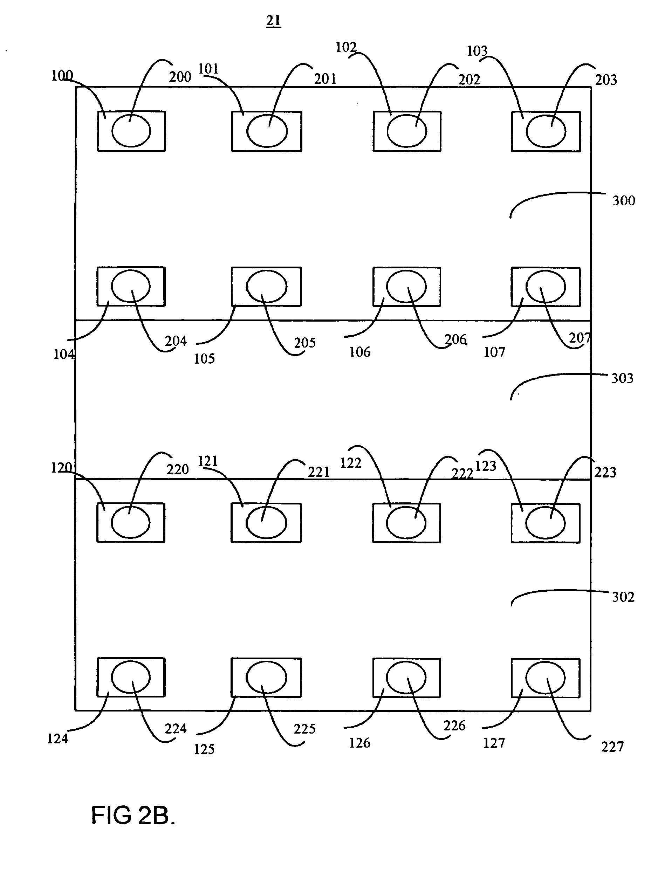

Fig. 2B illustrates a solution 21 with two weighbridges 300, 302, between which is a fixed crossing element 303. It is notable from the solutions of figs. 2A and 2B that certain weighbridge modules and crossing elements can be used for designing various scales assemblies, which enables a modular matching and common use of weighbridges.

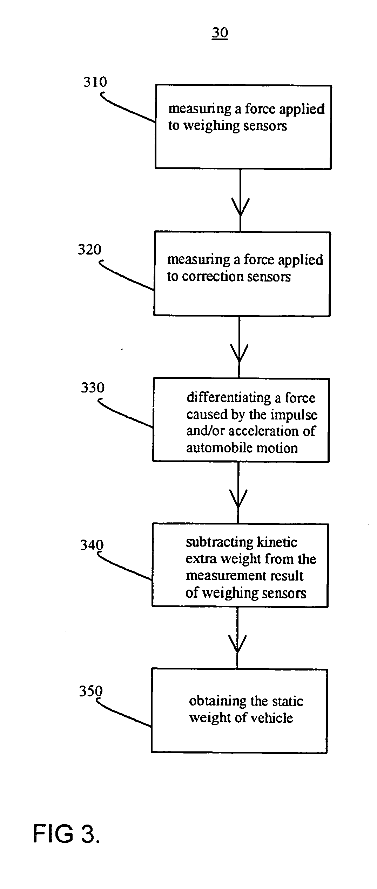

Fig. 3 illustrates a flowchart representing one preferred embodiment for a method of the invention. There, a sequence 310 comprises measuring a force applied to weighing sensors. A sequence 320 comprises measuring a force applied to correction sensors. This is followed by differentiating in a sequence 330 a force produced by the impulse and/or acceleration of the motion of an automobile. A sequence 340 comprises subtracting a kinetic extra weight from the measurement result of the weighing sensors. In some embodiments, the extra weight may be negative as well. This results in a static vehicle weight, i.e. a rest mass, in a sequence 350.

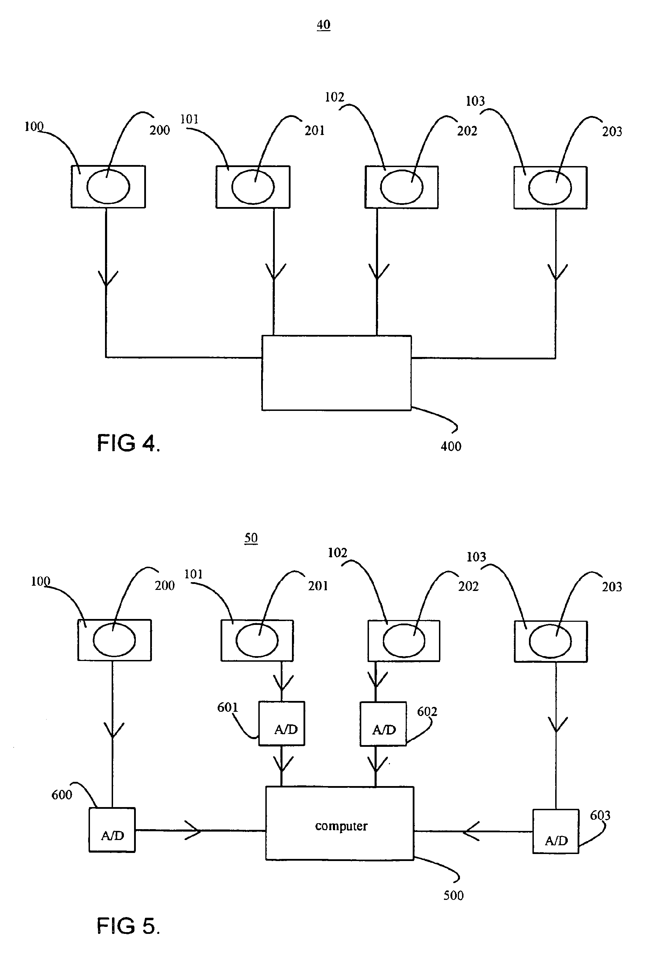

Fig. 4 shows a weighing device 400 which is preferably set in telecommunication with sensors 100, 101, 102, 103 and 200, 201, 202, 203. The telecommunications can be implemented by means of a separate solid or wireless connection individually from each sensor 100, 101, 102, 103 and 200, 201, 202, 203. It is also possible that in some preferred inventive embodiments, two or more sensors be used for transmitting measurement results along a common communication line, whereby each sensor is preferably provided with its own address.

Fig. 5 shows a weighing device 500 which, in one preferred embodiment 50 of the invention, comprises typically a computer. More specifically, the computer may be a PC (Personal Computer), Apple Macintosh, or any other microprocessor- or digital-signal-processor-based data processing unit. It is preferred, however, that the computer 500 be a PC, and between sensors 100, 101, 102, 103 and 200, 201, 202, 203 are fitted A/D-converters 600, 601, 602, 603. The A/D-converters 600, 601, 602, 603 are adapted to convert the measurement results of the sensors 100, 101, 102, 103 and 200, 201, 202, 203 from analogic results to a digital series mode in order to make said results processible in the computer 500. The digital series mode is preferably of the type RS 422/485, CAN or a corresponding digital series mode.

If all measurement results are channeled along a common communication line, there is preferably required just one A/D-converter in connection with this communication line. If there are several communication lines in use, each line or link requires either its own A/D-converter 600, 601, 602, 603 or the computer 500 is provided with a single A/D-converter, integrated in connection therewith and adapted to handle several communication lines. In some preferred inventive embodiments, the A/D-converters 600, 601, 602, 603 are integrated in connection with sensors 100, 101, 102, 103 and 200, 201, 202, 203. Furthermore, in order to establish a communication link, the sensors and the computer must be fitted with communication adapters (not shown in the figure) consistent with this particular type of communication link.

Numerous industrial and commercial benefits of the inventive solution have been discussed with reference to the enclosed embodiments. The inventive method and arrangement for weighing a moving vehicle enables a highly accurate measurement for the static weight of a vehicle. In addition, the inventive method and arrangement for weighing a moving vehicle enables a highly accurate measurement for the axle-specific static weight of a vehicle. Thus, the inventive solution is capable of eliminating unnecessary stops within a factory perimeter or in road traffic for establishing overloads or road loadings. In addition, the invention facilitates essentially the processing of measurement results.

It is obvious that all embodiments can be preferably applied in connection with all vehicles, such as passenger cars, trucks and/or buses. Preferred applications of the invention include control weighings as well as commercial weighings, e.g. within factory areas, in road traffic, and at border stations.

Naturally, the invention can also be applied in connection with trains, the weighbridges 300, 301, 302 and/or sensors 100, 101, 102, 103, 104, 105, 106, 107 and 200, 201, 202, 203, 204, 205, 206, 207 being preferably installed under the rails. Moreover, in a train application the weighbridges are preferably provided with a dibbling wheel identification, whereby the wheels can be identified and the measurement results reveal e.g. which wheels of a train are not circular. The sites for a train application include preferably railways and railway yards.

The invention has been described above with reference to the enclosed embodiments. However, it is obvious that the invention is not limited to just those, but encompasses all embodiments consistent with the inventive concept and the annexed claims.

## Claims

1. A method for weighing a moving vehicle, **characterized in that**
- at least one weighing sensor (100, 101, 102, 103, 104, 105, 106, 107) measures the kinetic weight of a vehicle,
- at least one correction sensor (200, 201, 202, 203, 204, 205, 206, 207) measures acceleration forces resulting from the motion of a vehicle,
- the measurement results of the at least one correction sensor (200, 201, 202, 203, 204, 205, 206, 207) and the at least one weighing sensor (100, 101, 102, 103, 104, 105, 106, 107) are used as a basis for establishing an estimate regarding the static weight of a vehicle, i.e. the rest mass.

2. A method as set forth in claim 1 for weighing a moving vehicle, **characterized in that** at least one correction sensor (200, 201, 202, 203, 204, 205, 206, 207) measures forces and/or accelerations produced by the motion of a vehicle and existing in a horizontal direction normal to the motion of the vehicle.

3. A method as set forth in claim 1 for weighing a moving vehicle, **characterized in that** the measurement results of at least one correction sensor (200, 201, 202, 203, 204, 205, 206, 207) and/or at least one weighing sensor (100, 101, 102, 103, 104, 105, 106, 107) are compared with at least one correction sensor (200, 201, 202, 203, 204, 205, 206, 207) and/or at least one weighing sensor (100, 101, 102, 103, 104, 105, 106, 107).

4. A method as set forth in claim 1 for weighing a moving vehicle, **characterized in that** at least two weighbridges 300, 301 include both at least one correction sensor (200, 201, 202, 203, 204, 205, 206, 207) and/or at least one weighing sensor (100, 101, 102, 103, 104, 105, 106, 107).

5. A method as set forth in claim 1 for weighing a moving vehicle, **characterized by** measuring the axle weights of a vehicle.

6. A method as set forth in claim 1 for weighing a moving vehicle, **characterized in that** the measurement results of at least one correction sensor (200, 201, 202, 203, 204, 205, 206, 207) and/or at least one weighing sensor (100, 101, 102, 103, 104, 105, 106, 107) are transmitted to a weighing device (500).

7. An arrangement for weighing a moving vehicle, **characterized by** comprising
- a weighbridge for supporting at least a partial weight of a vehicle,
- at least one weighing sensor (100, 101, 102, 103, 104, 105, 106, 107) associated with the weighbridge for measuring kinetic weight of a vehicle from the weighbridge,
- at least one correction sensor (200, 201, 202, 203, 204, 205, 206, 207) associated with the weighbridge for measuring forces resulting from the motion of a vehicle, as well as
- means (500) for establishing an estimate regarding the static weight of a vehicle, i.e. the rest mass, on the basis of measurement results from the at least one correction sensor (200, 201, 202, 203, 204, 205, 206, 207) and the at least one weighing sensor (100, 101, 102, 103, 104, 105, 106, 107).

8. An arrangement as set forth in claim 7 for weighing a moving vehicle, **characterized by** comprising two separate weighbridges (300, 301), which are provided with at least one correction sensor (200, 201, 202, 203, 204, 205, 206, 207) and/or at least one weighing sensor (100, 101, 102, 103, 104, 105, 106, 107).

9. An arrangement as set forth in claim 7 for weighing a moving vehicle, **characterized in that** the measurement results of at least one correction sensor (200, 201, 202, 203, 204, 205, 206, 207) and/or at least one weighing sensor (100, 101, 102, 103, 104, 105, 106, 107) are adapted to be transmitted to a weighing device (500).

10. An arrangement as set forth in claim 9 for weighing a moving vehicle, **characterized in that** the weighing device (500) comprises a microprocessor- or digital-signal-processor-based data processing unit.

## Patentansprüche

1. Verfahren zum Wiegen eines in Bewegung befindlichen Fahrzeugs, **dadurch gekennzeichnet, dass**
- wenigstens ein Wägesensor (100, 101, 102, 103, 104, 105, 106, 107) die kinetische Masse eines Fahrzeugs misst,
- wenigstens ein Korrektursensor (200, 201, 202, 203, 204, 205, 206, 207) sich aus der Bewegung eines Fahrzeugs ergebende Beschleunigungskräfte misst,
- die Messergebnisse des wenigstens einen Korrektursensors (200, 201, 202, 203, 204, 205, 206, 207) und des wenigstens einen Wägesensors (100, 101, 102, 103, 104, 105, 106, 107) als eine Basis zum Ermitteln einer Schätzung bezüglich der statischen Masse eines Fahrzeugs, d.h. der Ruhemasse, verwendet werden.

2. Verfahren nach Anspruch 1 zum Wiegen eines in Bewegung befindlichen Fahrzeugs, **dadurch gekennzeichnet, dass** wenigstens ein Korrektursensor (200, 201, 202, 203, 204, 205, 206, 207) Kräfte und/oder Beschleunigungen misst, die von der Bewegung eines Fahrzeugs erzeugt werden und in einer zur Bewegung des Fahrzeugs senkrechten horizontalen Richtung bestehen.

3. Verfahren nach Anspruch 1 zum Wiegen eines in Bewegung befindlichen Fahrzeugs, **dadurch gekennzeichnet, dass** die Messergebnisse von wenigstens einem Korrektursensor (200, 201, 202, 203, 204, 205, 206, 207) und/oder wenigstens einem Wägesensor (100, 101, 102, 103, 104, 105, 106, 107) mit wenigstens einem Korrektursensor (200, 201, 202, 203, 204, 205, 206, 207) und/oder wenigstens einem Wägesensor (100, 101, 102, 103, 104, 105, 106, 107) verglichen werden.

4. Verfahren nach Anspruch 1 zum Wiegen eines in Bewegung befindlichen Fahrzeugs, **dadurch gekennzeichnet, dass** wenigstens zwei Plattformwaagen (300, 301) jeweils wenigstens einen Korrektursensor (200, 201, 202, 203, 204, 205, 206, 207) und/oder wenigstens einen Wägesensor (100, 101, 102, 103, 104, 105, 106, 107) aufweisen.

5. Verfahren nach Anspruch 1 zum Wiegen eines in Bewegung befindlichen Fahrzeugs, **dadurch gekennzeichnet, dass** die Achslasten eines Fahrzeugs gemessen werden.

6. Verfahren nach Anspruch 1 zum Wiegen eines in Bewegung befindlichen Fahrzeugs, **dadurch gekennzeichnet, dass** die Messergebnisse von wenigstens einem Korrektursensor (200, 201, 202, 203, 204, 205, 206, 207) und/oder wenigstens einem Wägesensor (100, 101, 102, 103, 104, 105, 106, 107) auf eine Wägevorrichtung (500) übertragen werden.

7. Anordnung zum Wiegen eines in Bewegung befindlichen Fahrzeugs, **dadurch gekennzeichnet, dass** sie Folgendes umfasst:
- eine Plattformwaage zum Tragen wenigstens eines Teilgewichts eines Fahrzeugs,
- wenigstens einen mit der Plattformwaage assoziierten Wägesensor (100, 101, 102, 103, 104, 105, 106, 107) zum Messen der kinetischen Masse eines Fahrzeugs von der Plattformwaage,
- wenigstens einen mit der Plattformwaage assoziierten Korrektursensor (200, 201, 202, 203, 204, 205, 206, 207) zum Messen von sich aus der Bewegung eines Fahrzeugs ergebenden Beschleunigungskräften sowie
- Mittel (500) zum Ermitteln einer Schätzung bezüglich der statischen Masse eines Fahrzeugs, d.h. der Ruhemasse, auf der Basis von Messergebnissen von dem wenigstens einen Korrektursensor (200, 201, 202, 203, 204, 205, 206, 207) und dem wenigstens einen Wägesensor (100, 101, 102, 103, 104, 105, 106, 107).

8. Anordnung nach Anspruch 7 zum Wiegen eines in Bewegung befindlichen Fahrzeugs, **gekennzeichnet durch** zwei separate Plattformwaagen (300, 301), die mit wenigstens einem Korrektursensor (200, 201, 202, 203, 204, 205, 206, 207) und/oder wenigstens einem Wägesensor (100, 101, 102, 103, 104, 105, 106, 107) versehen sind.

9. Anordnung nach Anspruch 7 zum Wiegen eines in Bewegung befindlichen Fahrzeugs, **dadurch gekennzeichnet, dass** die Messergebnisse von wenigstens einem Korrektursensor (200, 201, 202, 203, 204, 205, 206, 207) und/oder wenigstens einem Wägesensor (100, 101, 102, 103, 104, 105, 106, 107) für das Übertragen auf eine Wägevorrichtung (500) ausgelegt sind.

10. Anordnung nach Anspruch 9 zum Wiegen eines in Bewegung befindlichen Fahrzeugs, **dadurch gekennzeichnet, dass** die Wägevorrichtung (500) eine Datenverarbeitungseinheit auf Mikroprozessor- oder Digitalsignalprozessorbasis umfasst.

## Revendications

1. Procédé de pesage d'un véhicule en mouvement,
**caractérisé en ce que**:
- au moins un capteur de pesage (100, 101, 102, 103, 104, 105, 106, 107) mesure le poids cinétique d'un véhicule,
- au moins un capteur de correction (200, 201, 202, 203, 204, 205, 206, 207) mesure les forces d'accélération résultant du mouvement d'un véhicule,
- les résultats de mesure d'au moins un capteur de correction (200, 201, 202, 203, 204, 205, 206, 207) et d'au moins un capteur de pesage (100, 101, 102, 103, 104, 105, 106, 107) sont utilisés comme base pour établir une estimation en ce qui concerne le poids statique d'un véhicule, c'est-à-dire la masse au repos.

2. Procédé selon la revendication 1 pour peser un véhicule en mouvement, **caractérisé en ce qu'**au moins un capteur de correction (200, 201, 202, 203, 204, 205, 206, 207) mesure les forces et/ou les accélérations produites par le mouvement d'un véhicule et existant dans une direction horizontale normale au mouvement du véhicule.

3. Procédé selon la revendication 1 pour peser un véhicule en mouvement, **caractérisé en ce que** les résultats de mesure d'au moins un capteur de correction (200, 201, 202, 203, 204, 205, 206, 207) et/ou d' au moins un capteur de pesage (100, 101, 102, 103, 104, 105, 106, 107) sont comparés à au moins un capteur de correction (200, 201, 202, 203, 204, 205, 206, 207) et/ou au moins un capteur de pesage (100, 101, 102, 103, 104, 105, 106, 107).

4. Procédé selon la revendication 1 pour peser un véhicule en mouvement, **caractérisé en ce qu'**au moins deux ponts de pesage 300, 301 comprennent au moins un capteur de correction (200, 201, 202, 203, 204, 205, 206, 207) et/ou au moins un capteur de pesage (100, 101, 102, 103, 104, 105, 106, 107).

5. Procédé selon la revendication 1 pour peser un véhicule en mouvement, **caractérisé par** la mesure des poids d'essieux d'un véhicule.

6. Procédé selon la revendication 1 pour peser un véhicule en mouvement, **caractérisé en ce que** les résultats de mesure d'au moins un capteur de correction (200, 201, 202, 203, 204, 205, 206, 207) et/ou d' au moins un capteur de pesage (100, 101, 102, 103, 104, 105, 106, 107) sont transmis à un dispositif de pesage (500).

7. Agencement pour peser un véhicule en mouvement, **caractérisé en ce qu'**il comprend :
- un pont de pesage pour supporter au moins un poids partiel d'un véhicule,
- au moins un capteur de pesage (100, 101, 102, 103, 104, 105, 106, 107) associé au pont de pesage pour mesurer le poids cinétique d'un véhicule à partir du pont de pesage,
- au moins un capteur de correction (200, 201, 202, 203, 204, 205, 206, 207) associé au pont de pesage pour mesurer les forces résultant du mouvement du véhicule, et
- des moyens (500) pour établir une estimation en ce qui concerne le poids statique d'un véhicule, c'est-à-dire la masse au repos, sur la base des résultats de mesure d'au moins un capteur de correction (200, 201, 202, 203, 204, 205, 206, 207) et d'au moins un capteur de pesage (100, 101, 102, 103, 104, 105, 106, 107)

8. Agencement selon la revendication 7 pour peser un véhicule en mouvement, **caractérisé en ce qu'**il comprend deux ponts de pesage distincts (300, 301) qui sont munis d'au moins un capteur de correction (200, 201, 202, 203, 204, 205, 206, 207) et/ou d'au moins un capteur de pesage (100, 101, 102, 103, 104, 105, 106, 107) .

9. Agencement selon la revendication 7 pour peser un véhicule en mouvement, **caractérisé en ce que** les résultats de mesure d'au moins un capteur de correction (200, 201, 202, 203, 204, 205, 206, 207) et/ou d' au moins un capteur de pesage (100, 101, 102, 103, 104, 105, 106, 107) sont adaptés pour être transmis à un dispositif de pesage (500).

10. Agencement selon la revendication 10 pour peser un véhicule en mouvement, **caractérisé en ce que** le dispositif de pesage (500) comprend une unité de traitement de données basée sur microprocesseur ou sur processeur de signal numérique.
